# EUROPÄISCHE PATENTSCHRIFT

(11) **EP 2 221 196 B1**
(45) Veröffentlichungstag und Bekanntmachung des Hinweises auf die Patenterteilung: **08.04.2015**
(21) Anmeldenummer: 09015035.0
(22) Anmeldetag: 04.12.2009
(51) Int. Cl.: B60G 7/00, B60G 21/05

(54) **Verbundlenkerachse und Verfahren zu ihrer Herstellung**
Twist beam axle and method for its production
Essieu semi-rigide et son procédé de fabrication

(30) Priorität: 24.02.2009 DE 102009010098
(43) Veröffentlichungstag der Anmeldung: 25.08.2010
(73) Patentinhaber: Benteler Automobiltechnik GmbH, 33102 Paderborn (DE)
(72) Erfinder: Schneider, Klaus, 34431 Marsberg (DE); Scherlitz, Frank, 59227 Ahlen (DE)
(74) Vertreter: Griepenstroh, Jörg

(56) Entgegenhaltungen:
- EP-A1- 1 832 448
- EP-A2- 1 380 455
- WO-A1-2008/108166
- DE-A1-102006 015 672
- JP-A- 2000 238 502

## Beschreibung

Die Erfindung betrifft eine Verbundlenkerachse mit den Merkmalen im Oberbegriff des Patentanspruchs 1 sowie ein Verfahren zu ihrer Herstellung gemäß den Merkmalen im Oberbegriff des Patentanspruchs 3.

Verbundlenkerachsen bestehen im Grundaufbau aus zwei seitlichen Längsarmen, an denen über angeschweißte Anbauteile die Räder angebunden werden. Eine bevorzugte Konstellation zur Erzielung einer hohen Steifigkeit bei geringem Gewicht ist die Ausführung der Seitenarme in Rohrform in direkter Anbindung eines Radträgerflansches. Hierbei ergibt sich das Problem, dass ein dünnwandiges Rohr, das für den Seitenarm verwendet wird, mit einer relativ dickwandigen Flanschplatte des Radträgerflansches verschweißt werden muss. Das dickere Material des Radträgerflansches entzieht dem Schweißprozess Wärme, mit der Folge, dass bei Schwanken der Schweißspaltbreite unterschiedliche Einbrandtiefen erzielt werden. Es hat sich gezeigt, dass derartige Prozessschwankungen große Auswirkungen auf die Bauteillebensdauer haben. Die nicht vollständig durchgeschweißten Schweißnähte können von innen nach außen aufreißen, wobei der Riss durch die nicht verschweißten Bereiche des Schweißspalts initiiert wird.

Mit speziell gefertigten Prototypen konnte nachgewiesen werden, dass bei vollständiger Verschweißung des Schweißspalts die Lebensdaueranforderungen erfüllt wurden. Die Sicherstellung einer vollständigen Durchschweißung ist aber nicht hinreichend prozesssicher umsetzbar, da der hierzu erforderliche größere Schweißspalt sowie die höhere Schweißenergie ein Durchbrennen und somit ein Einfallen der Schweißnaht zur Folge hat.

Zum Stand der Technik ist die WO 2008/108166 A1 zu nennen, die eine Verbundlenkerachse mit von rohrförmigen Seitenarmen gehaltenen Radträgerflanschen offenbart, welche mit den rohrförmigen Seitenarmen verschweißt sind. An den Radträgerflanschen ist eine zu den Seitenarmen gerichtete Ausstellung ausgebildet, die an eine Innenkontur des rohrförmigen Seitenarms angepasst ist.

Die JP 2000 238502 A offenbart ebenfalls eine Verbundlenkerachse mit von rohrförmigen Seitenarmen gehaltenen Radträgerflanschen, welche mit den rohrförmigen Seitenarmen verschweißt sind. An den Radträgerflanschen ist eine zu den Seitenarmen gerichtete Ausstellung ausgebildet, die an eine Innenkontur des rohrförmigen Seitenarms angepasst ist.

Zum Stand der Technik wird noch auf die DE 10 2006 015672 A1 verwiesen betreffend eine Ausführungsform einer Fahrzeugachse, bei welcher an einem Achskörper Befestigungsdome angeformt sind. Daran angesetzt und verschweißt sind Halbschalen der Längslenker bzw. des Tragarms. Durch die Form der aus der Querschnittskontur des Achskörpers heraustretenden Befestigungsdome ergeben sich an deren Flanken günstige Schweißbadstützen für das Ziehen der Schweißnähte.

Hiervon ausgehend liegt der Erfindung die Aufgabe zu Grunde, eine Verbundlenkerachse mit einem von rohrförmigen Seitenelementen gehaltenen Radträgerflansch aufzuzeigen, bei welchem ein prozesssicheres Verbinden der Radträgerflansche mit den Seitenarmen möglich ist. Ferner soll ein alternatives Verfahren zur Herstellung einer solchen Verbundlenkerachse aufgezeigt werden. Den gegenständlichen Teil dieser Aufgabe löst Patentanspruch 1.

Ein entsprechendes Verfahren ist Gegenstand des Patentanspruchs 3.

Die jeweils abhängigen Ansprüche betreffen vorteilhafte Weiterbildungen des Erfindungsgedankens.

Bei der erfindungsgemäßen Verbundlenkerachse ist vorgesehen, dass an den Radträgerflanschen eine in Richtung zum Seitenarm gerichtete Ausstellung ausgebildet ist, die als Schweißbadstütze an eine Innenkontur des rohrförmigen Seitenarms angepässt ist. Im Feinstanzprozess wird die Radträgerflanschplatte so verprägt, dass die durch Verprägen hergestellte Ausstellung die Rohr-Innenkontur des Seitenarms abbildet. Dadurch wirkt die Ausstellung als Schweißbadstütze, indem sie den Schweißspalt zu einer Seite hin abdeckt. Das Verschweißen erfolgt von außen. Daher ist die Ausstellung in Form einer Schweißbadstütze an die Innenkontur der rohrförmigen Seitenwand angepasst. Maßgeblich ist hier die Innenkontur in dem Kontaktbereich zu dem Seitenarm. Auf diese Weise ist es möglich, die Schweißnaht prozesssicher bis zum Schweißspaltgrund durchzuschweißen, wobei ein Durchbrennen und somit ein Einfallen der Schweißnaht durch die Schweißbadstütze verhindert wird.

Derartige Verbundlenkerachsen lassen sich im Hinblick auf die Verbindung zwischen Seitenarmen und den Radträgerflanschen prozesssicher herstellen. Durch das Verprägen ist zudem möglich, in die Radträgerflansche mehrere Abstandshalter einzubringen, die benachbart zu der als Schweißbadstütze ausgebildeten Ausstellung in einem einzigen Arbeitsgang hergestellt werden können. Durch die konstanten, etwas größeren Schweißspalten kann die benötigte hohe Schweißleistung eingebracht werden, ohne dass das aufgeschmolzene Schweißgut aus der Schweißnaht heraustropfen kann. Dies wird durch die als Schweißbadstütze ausgebildete Ausstellung verhindert. Im Rahmen der Erfindung kann die Einbrandtiefe durch höhere Schweißströme und entsprechend breitere Schweißspalte somit so hoch eingestellt werden, dass eine vollständige Durchschweißung der Schweißnaht möglich ist, mit der Folge, dass die Bauteillebensdauer im Vergleich zu Bauteilen, die ohne derartige Schweißbadstützen ausgebildet sind, wesentlich weniger schwankt. Das erfindungsgemäße Herstellungsverfahren ist prozesssicher.

Da beim Herstellen der Ausstellung ohnehin ein Verprägen der Radträgerflansche erfolgt, kann optional durch Verprägen eine Fase als Nahtvorbereitung am Radträgerflansch ausgebildet werden. Mit einem einzigen Verprägeschritt können somit die als Schweißbadstütze dienende Ausstellung, die Abstandshalter zur Einstellung der Schweißspaltbreite sowie die Nahtvorbereitung ausgebildet werden.

Es ist im Rahmen der Erfindung auch möglich, die Radträgerflansche als Schmiedeteil oder sogar als Gussteil zu gestalten, wobei die Schweißbadstütze durch Schmieden bzw. Verformen hergestellt wird. Die Radnabe kann bei diesen Bauteilen einstückig mit dem Radträgerflansch ausgebildet sein.

Die Erfindung wird nachfolgend anhand eines in den Zeichnungen dargestellten Ausführungsbeispiels näher erläutert. Es zeigt:
- Figur 1: eine perspektivische Ansicht eines Teilbereichs einer Verbundlenkerachse an einem rohrförmigen Seitenarm befestigten Radträgerflansch (Stand der Technik);
- Figur 2: eine schematische Darstellung des Radträgerflansches der Figur 1 mit einem Endabschnitt des rohrförmigen Seitenarms im Querschnitt (Stand der Technik);
- Figur 3: eine perspektivische Ansicht einer Verbundlenkerachse mit einem erfindungsgemäßen Radträgerflansch;
- Figur 4: den Radträgerflansch der Figur 3 und den rohrförmigen Seitenarm im Querschnitt;
- Figur 5: den erfindungsgemäßen Radträgerflansch der Figuren 3 und 4 in Blickrichtung auf die Befestigungsseite des Seitenarms und
- Figur 6: eine alternative Ausführungsform, bei welcher der Radträgerflansch einteiliger Bestandteil eines Achsträgers mit daran ausgebildeter Radnabe ist.

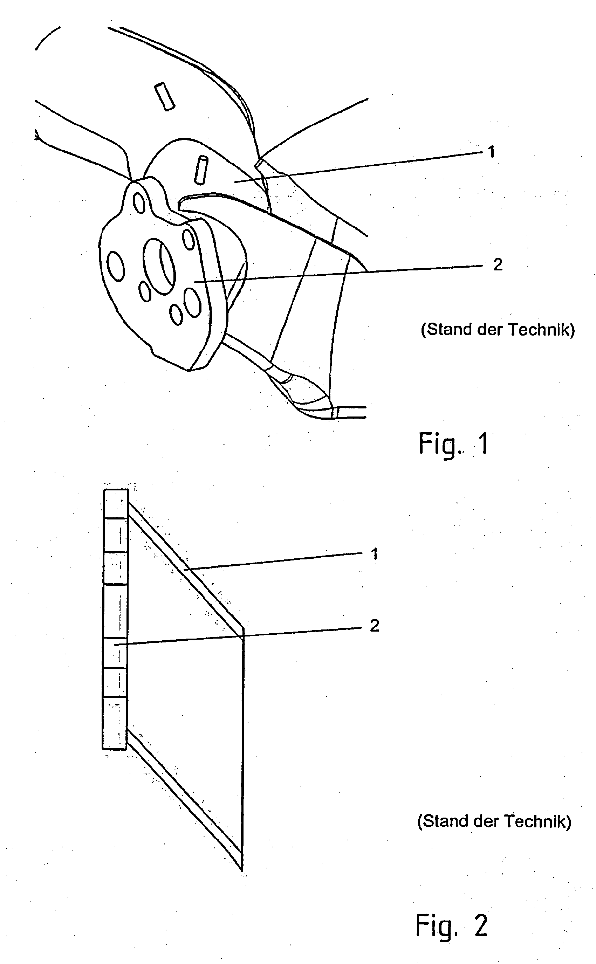

Figur 1 zeigt eine perspektivische Ansicht eines radseitigen Endes einer Verbundlenkerachse. Es ist ein rohrförmiger Seitenarm 1 zu erkennen, an dessen Ende ein ebener Radträgerflansch 2 schweißtechnisch befestigt ist.

Figur 2 zeigt die Anordnung der Figur 1 im Schnitt. Es ist zu erkennen, dass die Wanddicke des rohrförmigen Seitenarms 1 wesentlich geringer ist als die Wanddicke des Radträgerflansches 2. Zudem trifft der rohrförmige Seitenarm 1 in einem relativ spitzen Winkel auf den Radträgerflansch 2, wodurch ein vollständiges Durchschweißen der Naht erschwert und die Prozesssicherheit beeinträchtigt wird.

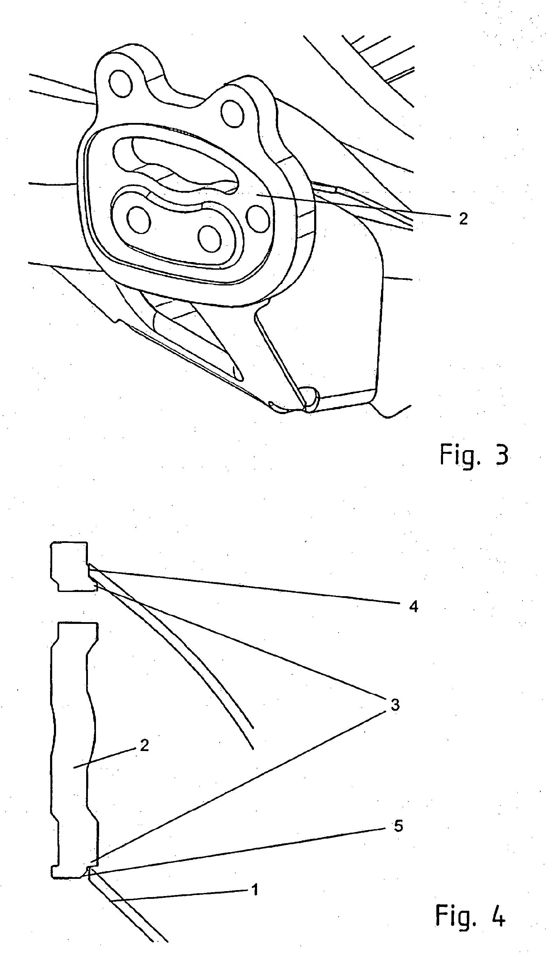

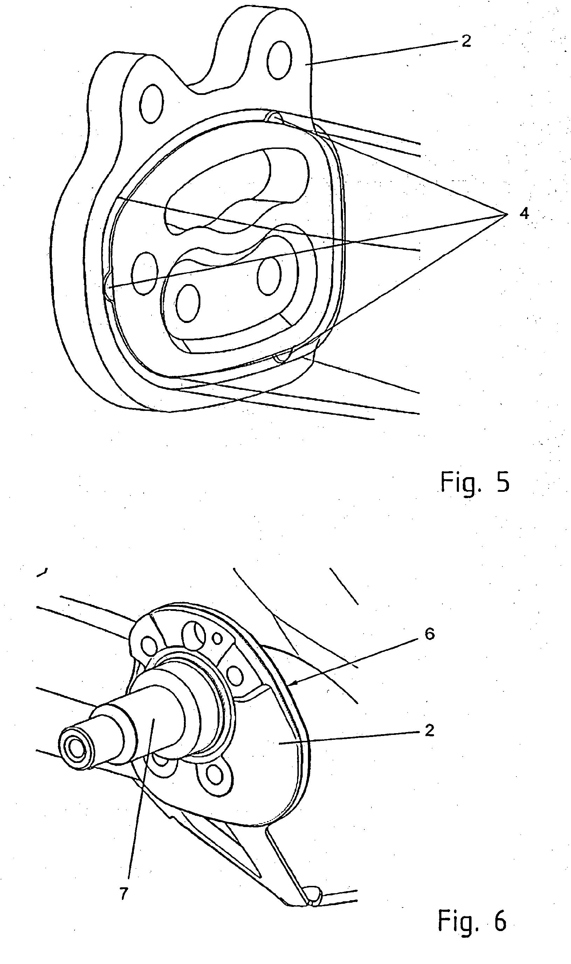

Figur 3 zeigt einen Radträgerflansch 2 in der erfindungsgemäßen Ausgestaltung. Es ist zu erkennen, dass der Radträgerflansch 2 aus dieser Perspektive gesehen eine Vertiefung aufweist. Diese Vertiefung führt auf der gegenüberliegenden Seite des Radträgerflansches 2 zu einer Ausstellung 3, wie sie in Figur 4 zu erkennen ist. Aus der Schnittdarstellung der Figur 4 wird deutlich, dass die Ausstellung 3 in Form einer Schweißbadstütze an die Innenkontur des rohrförmigen Seitenarms 1 angepasst ist. Die Ausstellung 3 dient somit als Schweißbadstütze, wenn der rohrförmige Seitenarm 1 von außen mit dem Radträgerflansch 2 verschweißt wird. Ferner ist aus Figur 4 zu erkennen, dass das in der Bildebene obere Ende des rohrförmigen Seitenarms 1 den Radträgerflansch 2 kontaktiert, während das untere Ende im Abstand zum Radträgerflansch 2 verläuft. Dies ist darauf zurückzuführen, dass in der gewählten Schnittebene am oberen Ende ein Abstandshalter 4 angeordnet ist, wie er in Figur 5 dargestellt ist. Figur 5 zeigt die Rückseite des in Figur 3 dargestellten Radträgerflansches. Es sind drei Abstandshalter 4 über den Umfang des Radträgerflansches 2 verteilt angeordnet. Die Abstandshalter 4 sind kleine buckelartige Verprägungen, die unmittelbar an die Ausstellung 3 angrenzen und ebenfalls durch Verprägen hergestellt sind. Die Abstandshalter 4 dienen dazu, die Schweißspaltbreite festzulegen, so dass mit entsprechend größeren, über dem Umfang konstanten Schweißspalten und höheren Schweißströmen gearbeitet werden kann.

Aus Figur 4 geht schließlich noch eine Fase 5 in unmittelbarer Nachbarschaft der Abstandshalter 4 bzw. der Ausstellung 3 hervor. Die umlaufende Fase 5 kann gleichzeitig während des Verprägevorgangs zur Herstellung des Abstandshalters 4 und der Ausstellungen 3 erzeugt werden.

Dadurch kann im Bereich des schweißtechnisch schwierig zu bearbeitenden unteren Nahtbereichs der Figur 4 eine Nahtvorbereitung kostengünstig bereitgestellt werden, welche die Prozesssicherheit zusätzlich begünstigt.

Die Ausführungsform der Figur 6 unterscheidet sich von denjenigen der Figuren 3 bis 5 dadurch, dass ein schmiedetechnisch hergestellter Radträger 6 vorgesehen ist mit integrierter Radnabe 7.

### Bezugszeichen:

- 1 -: Seitenarm
- 2 -: Radträgerflansch
- 3 -: Ausstellung
- 4 -: Abstandshalter
- 5 -: Fase
- 6 -: Radträger
- 7 -: Radnabe

## Patentansprüche

1. Verbundlenkerachse mit von rohrförmigen Seitenarmen (1) gehaltenen Radträgerflanschen (2), welche mit den rohrförmigen Seitenarmen (1) verschweißt sind, wobei an den Radträgerflanschen (2) eine zu den Seitenarmen (1) gerichtete Ausstellung (3) ausgebildet ist, die als Schweißbadstütze an eine Innenkontur des rohrförmigen Seitenarms (1) angepasst ist, dadurch **gekennzeichnet, dass** die Radträgerflansche (2) mehrere Abstandshalter (4) aufweisen, benachbart zu der als Schweißbadstütze ausgebildeten Ausstellung (3).

2. Verbundlenkerachse nach Anspruch 1, **dadurch gekennzeichnet, dass** an den Radträgerflanschen (6) eine Fase (5) als Nahtvorbereitung ausgebildet ist.

3. Verfahren zur Herstellung einer Verbundlenkerachse, bei welchem ein Radträgerflansch (2) mit einem rohrförmigen Seitenarm (1) der Verbundlenkerachse verschweißt wird, wobei eine als Schweißbadstütze dienende Ausstellung (3) in ihrem Verlauf an eine Innenkontur des Seitenarms (1) angepasst ist und in der Schweißposition in den Seitenarm (1) greift, welcher von außen derart mit den Radträgerflanschen (2) verschweißt wird, dass die Einbrandtiefe sich bis in die Ausstellung (3) erstreckt, dadurch **gekennzeichnet, dass** benachbart zu der die Schweißbadstütze bildenden Ausstellung (3) mehrere Abstandshalter (4) zur Festlegung einer Schweißspaltbreite ausgebildet werden und wobei der Radträgerflansch (2) in Richtung zum Seitenarm (1) zur Ausbildung der Ausstellung (3) verprägt wird.

4. Verfahren nach Anspruch 3, **dadurch gekennzeichnet, dass** an die Radträgerflansche (2) eine Fase (5) als Nahtvorbereitung ausgebildet wird.

## Claims

1. Twist-beam rear axlecomprising wheel carrier flanges (2) which are held by tubular side arms (1) and are welded to thetubular side arms (1), a raised portion (3) that faces the side arms (1) being formed on the wheel carrier flanges (2) and being adapted toan inner contour of the tubular side arm (1) in the form of a weld pool support, **characterised in that** the wheel carrier flanges (2) comprise a plurality of spacers (4) that are adjacent to the raised portion (3) that is designed as a weld pool support.

2. Twist-beam rear axle according to claim 1, **characterised in that** a chamfer (5) is formed on the wheel carrier flanges (6) as a joint preparation.

3. Method for producing a twist-beam rear axle, in which a wheel carrier flange (2) is welded to a tubular side arm (1) of the twist-beam rear axle, a raised portion (3) that serves as a weld pool support beingadapted to an inner contourof the side arm (1) in terms of the shape thereof and engaging with the side arm (1) when in the weld position, said side arm being welded on the outside to the wheel carrier flanges (2) in such a way that the penetration depth extendsas far as into the raised portion (3), **characterised in that** a plurality of spacers (4) for determininga weld gap width are formed such that they are adjacent to the raised portion (3) that forms the weld pool support, and the wheel carrier flange (2) being stampedin the direction of the side arm (1) for the purpose of forming the raised portion (3).

4. Method according to claim 3, **characterised in that** a chamfer (5) is formedon the wheel carrier flanges (2) as a joint preparation.

## Revendications

1. Essieu de suspension composite équipé de flasques supports de roues (2) soutenus par des bras latéraux tubulaires (1), lesquels flasques sont soudés aux bras latéraux tubulaires (1), dans lequel il se présente sur les flasques supports de roues (2) une disposition (3) tournée vers les bras latéraux (1), qui sert à soutenir un bain de fusion en s'adaptant à un contour interne du bras latéral tubulaire (1), **caractérisé en ce que** les flasques supports de roues (2) présentent plusieurs entretoises (4) au voisinage de la disposition (3) servant à soutenir le bain de fusion.

2. Essieu de suspension composite selon la revendication 1, **caractérisé en ce qu'**un chanfrein (5) est formé comme préparation à la soudure sur les flasques supports de roues (6).

3. Procédé de fabrication d'un essieu de suspension composite, dans lequel un flasque support de roue (2) est soudé à un bras latéral tubulaire (1) de l'essieu de suspension composite, dans lequel une disposition (3) servant à soutenir un bain de fusion est adaptée dans son parcours à un contour interne du bras latéral (1) et s'engage dans la position de soudage dans le bras latéral (1) qui est soudé de l'extérieur aux flasques supports de roues (2) en sorte que la profondeur de pénétration s'étende jusque dans la disposition (3), **caractérisé en ce que**, au voisinage de la disposition (3) servant à soutenir un bain de fusion, il est formé plusieurs écarteurs (4) pour établir une largeur d'intervalle de soudage et dans lequel le flasque support de roue (2) est estampé dans la direction du bras latéral (1) pour former la disposition (3).

4. Procédé selon la revendication 3, **caractérisé en ce qu'**un chanfrein (5) est formé sur les flasques supports de roues (2) comme préparation à la soudure.
